# EUROPEAN PATENT SPECIFICATION

(11) **EP 1 039 774 B1**
(45) Date of publication and mention of the grant of the patent: **13.09.2006**
(21) Application number: 00103401.6
(22) Date of filing: 24.02.2000
(51) Int. Cl.: H04Q 11/04, H04L 12/56

(54) **An ATM buffer controller and a method thereof**
Verfahren und Anlage zur Puffersteuerung für ATM
Méthode de contrôle et contrôleur de tampon ATM

(30) Priority: 24.02.1999 JP 4720699
(43) Date of publication of application: 27.09.2000
(73) Proprietor: NEC CORPORATION, Tokyo (JP)
(72) Inventor: Hara, Minori, Minato-ku, Tokyo (JP)
(74) Representative: Baronetzky, Klaus

(56) References cited:
- EP-A- 0 817 435
- WO-A-97/33411
- US-A- 5 719 865
- US-A- 5 850 399

## Description

### BACKGROUND OF THE INVENTION

### 1. Technical Field of the Invention

The present invention relates to an ATM (asynchronous transfer mode) buffer controller and an ATM buffer control method used in an apparatus, which transmits and receives ATM cells via an asynchronous transfer mode network (ATM network), for maintaining a high level of the quality of service of ATM traffic.

### 2. Description of the Related Art

An asynchronous transfer mode (ATM) technology is utilized in many telecommunication applications because it is suitable for transmitting large capacity of data such as voice and an image and a bandwidth can be varied depending on a state of traffic congestion. However, if suitable traffic control is not executed, although sufficient bandwidth is guaranteed, a high level of the quality of service of ATM traffic cannot be maintained.

Traffic shaping control is utilized to partially compensate the peak cell rate of ATM connection affected by a cell delay variation (CDV). A stream of ATM cells in virtual channel connection (VCC) and virtual path connection (VPC) maintains desirable characteristics by the traffic shaping control. In an ATM switching system, by the traffic shaping control, an interval between ATM cells in the stream is optimized, and as the result, a peak cell rate is lowered, burst size is limited and the CDV is reduced.

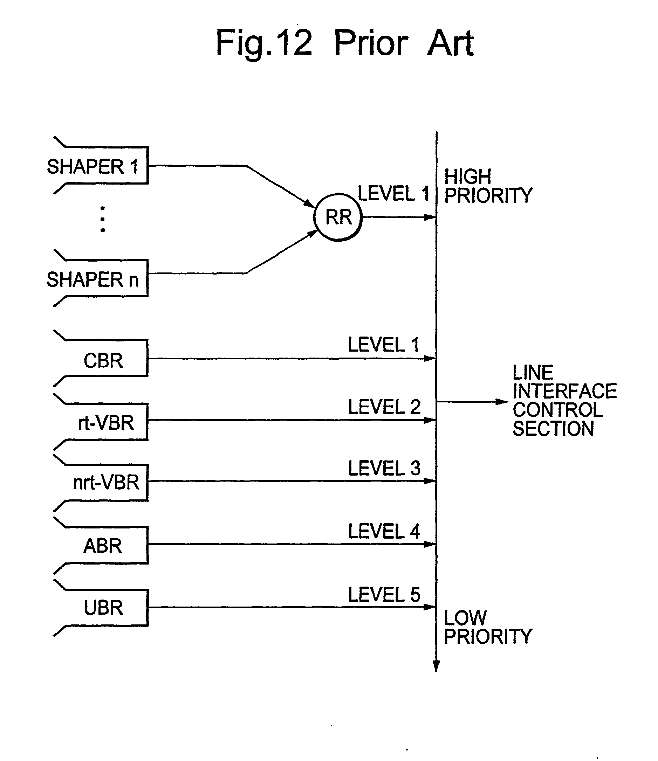

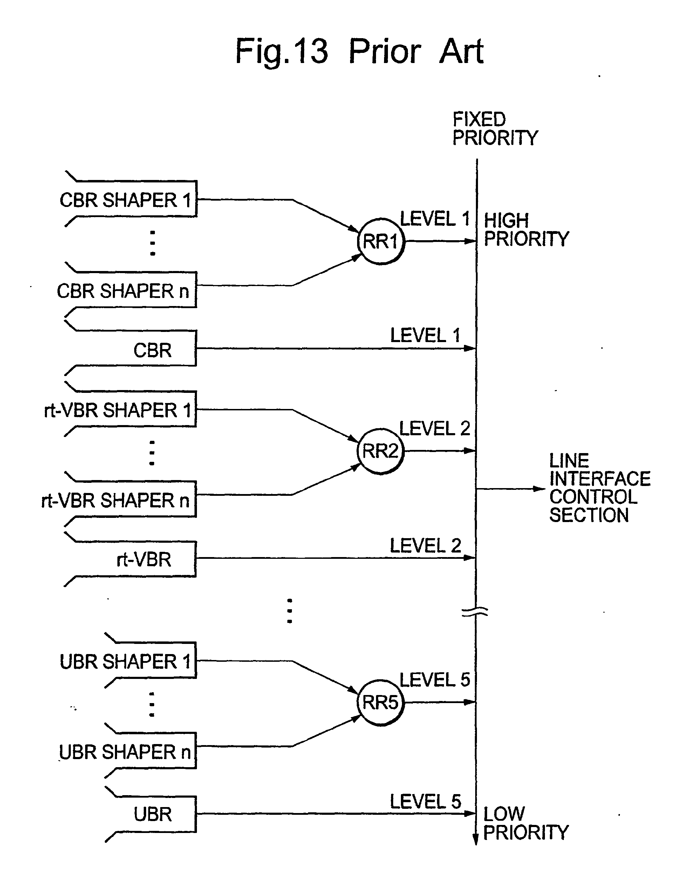

Figs. 12 and 13 show conceptual drawings of the traffic shaping control in prior examples. Fig. 12 shows an example that a plurality of shaper queues are provided for the traffic requiring a shaping control and output ATM cells from a shaper queue are so arranged as to have a fixed priority level (e.g. level 1). Fig. 13 shows an example that a plurality of shaper queues are provided for the traffic requiring a shaping control for each priority level which is given to a corresponding service category. Service categories of "CBR", "rt-VBR", "nrt-VBR", "ABR" and "UBR" stand for "Constant Bit Rate", "real time Variable Bit Rate", "non real time Variable Bit Rate", "Available Bit Rate" and "Unspecified Bit Rate" respectively.

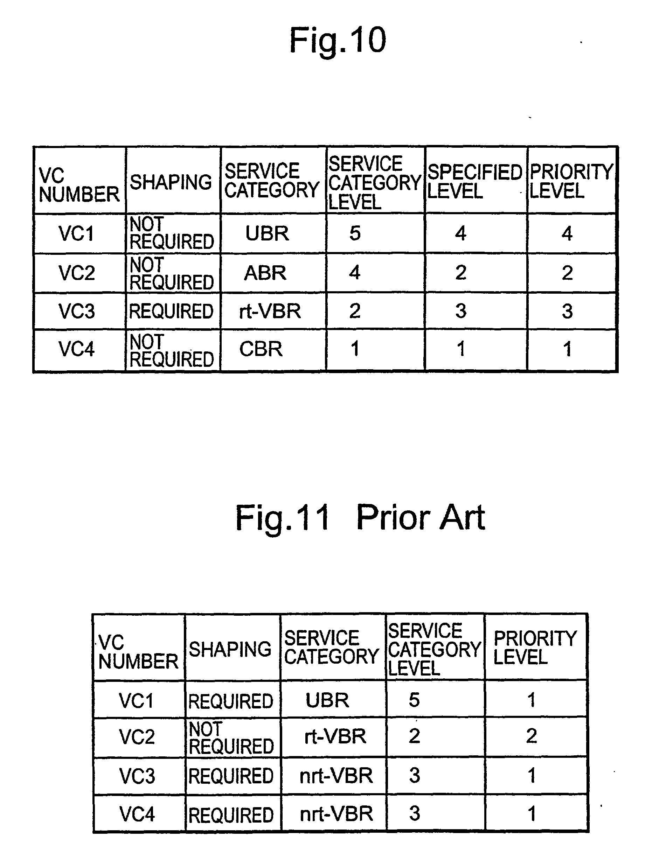

In the example that output from a shaper queue is fixed to a specific priority level as shown in Fig. 12, an example of parameters to be set for priority control is shown in Fig. 11. In this case, the priority level of traffic to which the traffic shaping control has been performed becomes the priority level 1 without relation to each service category level of the traffic, i.e., the traffic shaping control has been performed for traffic on VC1, VC3 and VC4, and priority level 1 is given to all VCs of VC1, VC3 and VC4 although the service category level is different between VC1 (having service category level 5) and VC3, VC4 (having service category level 3). Therefore, an element such as the class of service category of traffic is not reflected upon actual priority control output, and as the result, the quality of priority control is deteriorated.

In the meantime, in the example that shaper queues are provided for each priority level which is given to a corresponding service category as shown in Fig. 13, the priority control of traffic to which the traffic shaping control has been performed is precisely executed, however, a shaper queue fixedly allocated to each service class cannot be used for a different service class. Also, in the prior examples shown in Figs. 12 and 13, the priority level of an output queue both depends upon only service category priority, and other priority such as an application or a service class cannot be reflected.

The present invention is made in view of the above situations, and the object is to provide an ATM buffer control method and an ATM buffer controller which performs the traffic shaping control and the priority control depending on every service category simultaneously, and maintains the high level of quality of service of ATM traffic independent of whether the traffic shaping is performed or not.

### SUMMARY OF THE INVENTION

An ATM buffer control method according to the present invention is characterized in that traffic requiring shaping and traffic not requiring shaping are respectively separately queued in a shaper queue and a classification queue in a device for sending or receiving an ATM cell via an ATM network, when the priority of output from a shaper is determined, priority is given according to a service category in case a priority level is specified, an arbitrary priority level is given in case a priority level is not specified and the priority of the respective queues of traffic requiring shaping and traffic not requiring shaping is alternately arranged.

An ATM controller according to the present invention is characterized in that it is provided with an ATM switch control section for switching an ATM cell according to a program stored in a memory, a buffer memory for storing the ATM cell switched by the ATM switch, an output buffer control section for managing a first and a second plurality of queues in the buffer memory, a shaper controller for executing parameter control and operation control for shaping traffic and a priority control section for executing output priority control for cells outputed from first and second plurality of queses.

The above output buffer is controller according to a shaping parameter set by the shaper controller, is composed of a shaper queue group in which a virtual channel requiring shaping is queued and a classification queue group composed of individual queues every the class of ATM service category and these queues are shared by plural virtual channels of the same class. Also, the above priority control section comprises a round robin group selector switch, a plurality of round robin control section and a priority selector switch. The round robin control section for fairly and sequentially outputting cells switched by the round robin group selector switch to an input of the priority selector switch. Further, the above output buffer control section determines whether shaping is required or not, referring to the contents of a request for setting a virtual channel and sets a parameter required for shaping in the above shaper controller in case shaping is required to enable shaping processing, when the priority of a shaper is determined, the above priority control section uniquely determines a priority level according to a service category or outputs ATM cells stored in the output buffer to a line according to a priority level in case priority is specified, uniquely determines a priority level according to a service category in case shaping is not required and outputs ATM cells stored in the output buffer to the line.

A record medium according to the present invention is characterized in that it is used in a device for sending or receiving an ATM cell via an ATM network, and a step for determining whether shaping is required or not, referring the contents of a request for setting a virtual channel, a step for setting a parameter required for shaping in a shaper controller in case shaping is required, a step for uniquely setting a priority level according to a service category when the priority of a shaper is determined or setting an arbitrary priority level independent of the class of a service category in case priority is specified and a step for uniquely setting a priority level according to a service category in case shaping is not required are programmed and stored.

In the above composition, traffic not requiring shaping is queued in respective dedicated output queues of Constant Bit Rate (CBR), Real-time Variable Bit Rate (rt-VBR), Non-real-time Variable Bit Rate (nrt-VBR), Available Bit Rate (ABR) and Unspecified Bit Rate (UBR) which are ATM service categories and is output in the order of respective priority via the control of fixed priority. In the meantime, traffic requiring shaping is queued in any hardware shaper of a shaper 1 to a shaper n and shaping processing is applied to the traffic. All the shapers from the shaper 1 to the shaper n can select a suitable one of five round robin (RR) control sections based upon the class of the traffic and setting in software and hereby, the optimum control of the priority in the output of the corresponding ATM traffic is executed.

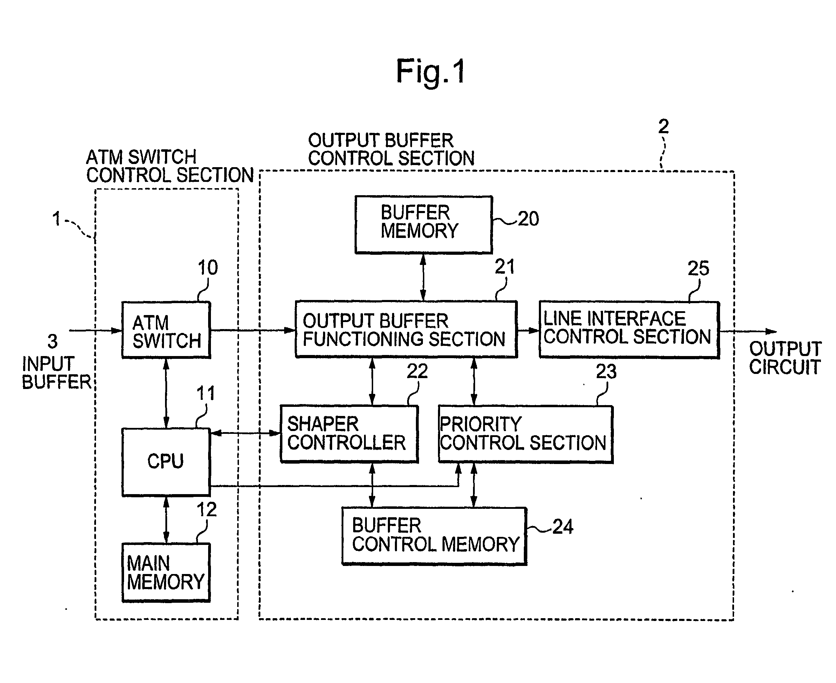

US-A-5,850,399 (YANG TAO ET AL) (named [D1] in the following) relates to an ATM buffer controller, as shown in Figure 1, for controlling traffic shaping and output priority for ATM cells, which having been switched by an ATM switch at a preceding stage (col. 3, lines 20-28) and to be output to an output circuit. The ATM buffer controller comprising: a buffer memory (15) for storing ATM cells switched by the ATM switch before sending out to the output circuit; an output buffer control section for managing queues (Figure 1 xBR queues) in an output buffer in addition to reading and writing the ATM cell stored in the buffer memory; a shaper controller (20)(CBR shaper in Figure 1) for executing parameter control and operation control for shaping output traffic; and a priority control section for executing output priority control according to a service category or priority information.

However, the shaper (20) in [D1] is applied for only CBR traffic as shown in Figure 1 and as described on column 4, liens 16-26.

Hereby, independent of whether shaping is required or not, suitable priority control can be executed and an ATM cell of high quality can be output.

### BRIEF DESCRIPTION OF THE DRAWINGS

Fig. 1 is a block diagram showing the configuration of an ATM controller according to the present invention;
Fig. 2 shows a conceptual drawing of an output buffer functioning section 2 shown in Fig. 1;
Fig. 3 is a flowchart showing a method of determining parameters for the priority control;

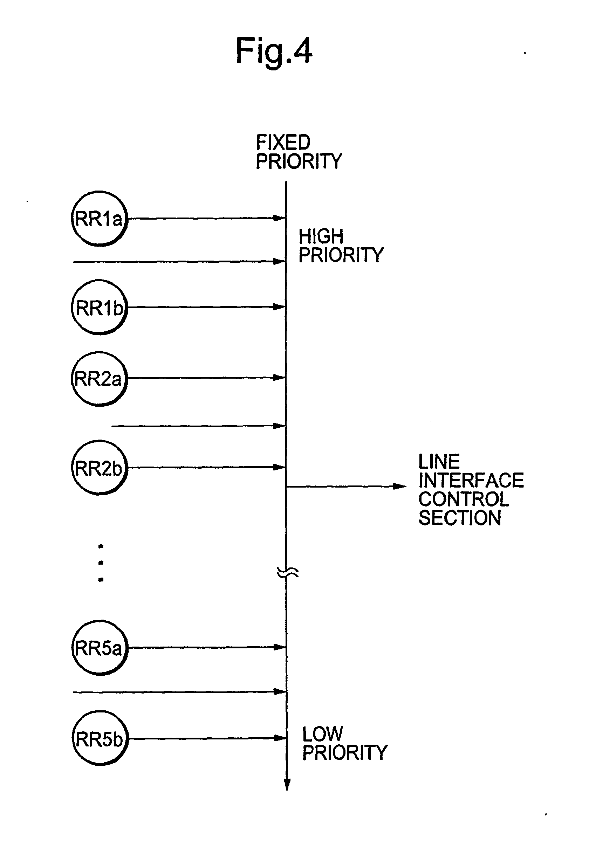

Fig. 4 shows the functional concept of the output buffer functioning section 2 of another embodiment of the present invention;
Fig. 5 shows the functional concept of the output buffer functioning section 2 of another embodiment of the present invention;
Fig. 6 shows the functional concept of the output buffer functioning section of another embodiment of the present invention;
Fig. 7 shows the functional concept of the output buffer functioning section 2 of another embodiment of the present invention;
Fig. 8 is a table showing correspondence between service category and value of Service Category Level;
Fig. 9 is a table showing an example of parameters to be set for the priority control according to the present invention;
Fig. 10 is a table showing another example of parameters to be set for the priority control according to the present invention;
Fig. 11 is a table showing an example of parameters to be set for the priority control according to the conventional technology;
Fig. 12 shows the operational concept of an output buffer functioning section in a prior example; and
Fig. 13 shows the operational concept of an output buffer functioning section in another prior example.

### DETAILED DESCRIPTION OF PREFERRED EMBODIMENTS

Fig. 1 is a block diagram showing an embodiment of an ATM controller according to the present invention. An ATM buffer controller according to the present invention is composed of an ATM switch control section 1, an output buffer control section 2 and an input buffer 3.

The ATM switch control section 1 includes an ATM switch 10 for switching ATM cells input via the input buffer 3, CPU 11 which is the center of control for the whole controller and a main memory 12 for storing programs and data required for CPU 11 to be operated.

The output buffer control section 2 includes a buffer memory 20 for storing ATM cells switched by the ATM switch 10 before sending out to an output circuit, an output buffer functioning section 21 for executing control for writing ATM cells to the buffer memory 20 and the queue control of a buffer, a shaper controller 22 for executing parameter control and operation control for shaping output traffic, a priority control section 23 for executing output priority control according to the service category or priority information provided by manual setting of maintenance personnel, a buffer control memory 24 for storing a parameter and data required for the output buffer functioning section 21, the shaper controller 22 and the priority control section 23 to be operated and a line interface control section 25 for interfacing the output buffer functioning section 21 and the output circuit to output ATM cells to an ATM network.

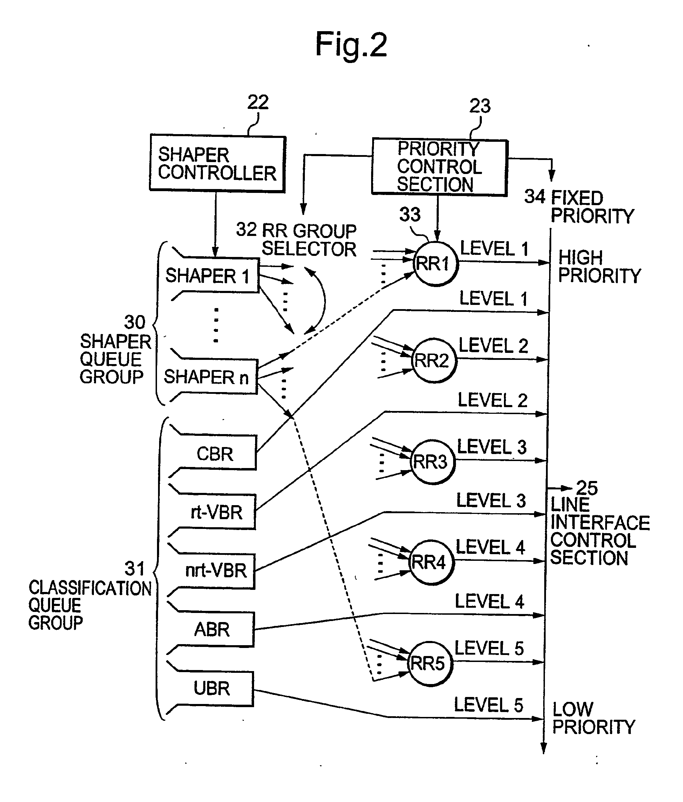

Fig. 2 shows a conceptual drawing of the output buffer functioning section 2 shown in Fig. 1. A shaper queue group 30 is a plurality of queues for storing ATM cells corresponding to a virtual channel (VC) which requires traffic shaping and is processed based upon a shaping parameter set by the shaper controller 22. A classification queue group 31 is composed of an individual queue corresponding to each class of the service category (CBR, rt-VBR, nrt-VBR, ABR, UBR). In the above queue, one VC does not occupy one queue but one queue is shared by plural VCs of the same class. A queue complies with first-in first-out (FIFO) and an ATM cell queued first in a queue is output first. ATM cells in the shaper queue group 30 and the classification queue group 31 finally arrive at the line interface control section 25, and an ATM cell arrived at a higher level position (the upper part of Fig. 2) has a priority for being output in accordance with the fixed priority 34 and only if no ATM cell is stored in the higher level position, an ATM cell in the lower level position is allowed to be output.

A round robin (RR) group selector 32 and a round robin (RR) control section 33 exist between the shaper queue group 30 and the fixed priority 34. The RR group selector 32 has a function for selecting an output priority of each ATM cell in respective shapers 1 to n. The RR control section 33 has a function for fairly and sequentially outputting ATM cells, which were output from the RR group selector 32 and input to the same RR control section 33, with the fixed priority 34 given to each RR control section. The RR group selector 32, the RR control section 33 and the fixed priority 34 are controlled by the priority control section 23.

An ATM cell received from the ATM network is switched by the ATM switch 10 via the input buffer 3 and is output to the ATM network from the output buffer control section 2 via the output circuit. At this time, in the output buffer control section 2, the output buffer functioning section 21 performs a control operation of memory writing and memory reading of the buffer memory 20, the shaper controller 22 performs a control operation of shaping processing, and the priority control section 23 performs a control operation of the priority of output.

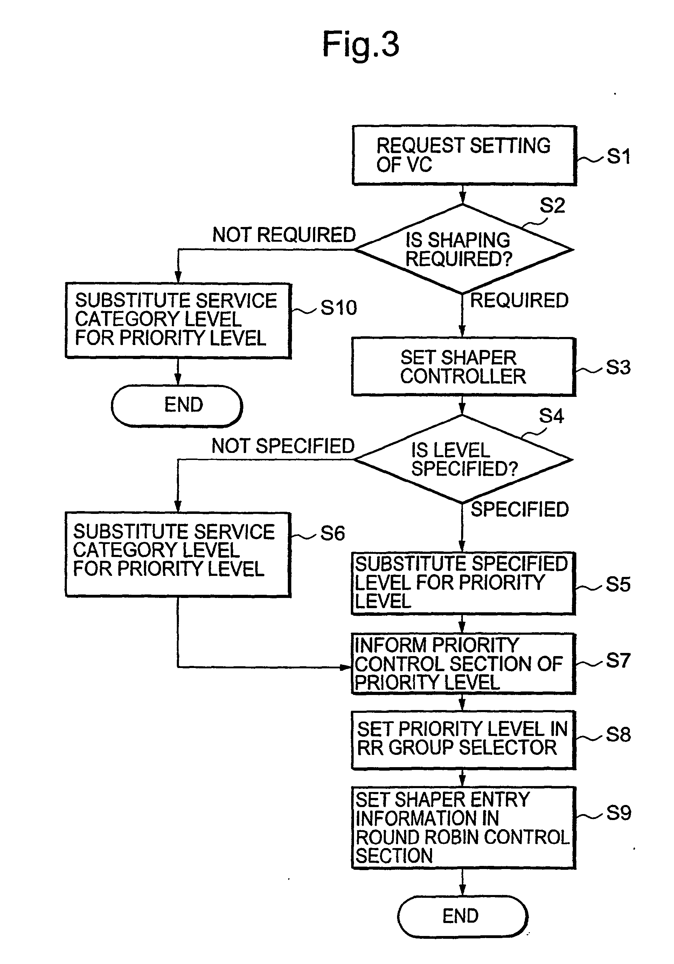

Fig. 3 is a flowchart showing the procedure of operation for setting a priority control parameter. Each operation of the output buffer functioning section 21, the shaper controller 22 and the priority control section 23 respectively shown in Fig. 1 will be described in detail using Figs. 2 and 3 and Fig. 8 below.

First, when a VC setting request is received in a step S1, the contents of the VC setting request are checked and it is determined whether traffic shaping is required or not in a step S2. If traffic shaping is required, a parameter required for traffic shaping is set in the shaper controller 22 in a step S3. A parameter required for traffic shaping means a traffic parameter according to "ATM Forum Traffic Management Specification Version 4.0 (af-tm-0056.000, Apr., 1996, hereinafter called TM4.0)" defined in an ATM forum and includes a peak cell rate (PCR), a sustainable cell rate (SCR) and maximum burst size (MBS). As defined in Table 2-1, "ATM service category attributes" in the above TM4.0, a required traffic parameter is different depending upon a service category of ATM. A traffic parameter required for a service category of VC, for which path setting has been requested, is set in the shaper controller 22 according to the above mentioned Table 2-1.

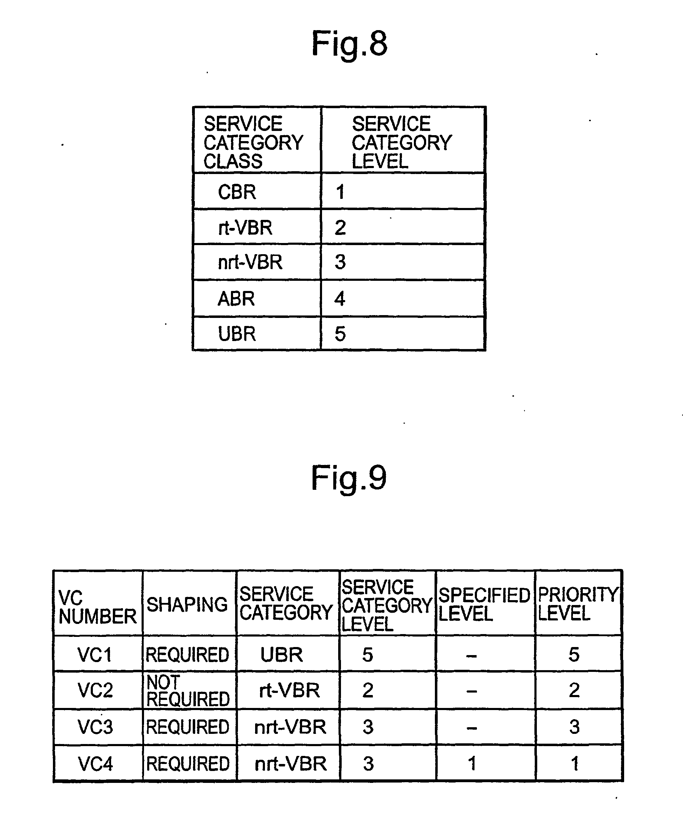

When the setting of a parameter required for traffic shaping is completed in processing in the step S3 shown in Fig. 3, it is required to determine the priority of the shaper and to select a specific RR group 32 (in Fig. 2), however, as long as the priority is not specified by the maintenance personnel, a priority level is uniquely determined according to the service category. Conversely, if the priority is specified, an arbitrary priority can be set independent of the class of the service category. As shown in Fig. 8, "Service Category Level" 1 to 5 are allocated to each service category (CBR, rt-VBR, nrt-VBR, ABR, UBR) and if a priority level is uniquely determined based upon a service category, the above level is used for a priority level as it is.

Next, it is determined whether a priority level is specified (Specified Level) or not in a step S4, and if a priority level is not specified, "Service Category Level" is substituted for "Priority Level" in a step S6. "Priority Level" is equivalent to the number of RR in the round robin control section 33 shown in Fig. 2. In the meantime, if it is judged in the step S4 that a priority level is specified, "Specified Level" is substituted for "Priority Level" in place of "Service Category Level" in a step S5. The priority control section 23 is informed of "Priority Level" in a step S7 and sets "Priority Level" in the RR group selector 32 in a step S8. Further, the priority control section 23 informs the round robin control section 33 shown in Fig. 2 of entry information showing from which shaper queue an ATM cell is input and sets it in a step S9.

In the case of traffic that shaping control is not required, it is determined in the step S2 that shaping control is not required, "Service Category Level" is substituted for "Priority Level" in a step S10 and is controlled as a level in the fixed priority 34 shown in Fig. 2.

The flowchart shown in Fig. 3 is concretely programmed, and stored in the main memory 12 shown in Fig. 1, CPU 11 in the ATM switch control section 1 successively reads the programmed flowchart and realizes the above operation by controlling the output buffer functioning section 21, the shaper controller 22 and the priority control section 23 respectively in the output buffer control section 2. In this embodiment, it is described that a program is resident in the main memory, however, a program is stored in a read-only memory, in a semiconductor memory or on a record medium such as a magnetic disk and an optical disk and may be also loaded into the main memory 12 if necessary.

Fig. 9 shows a table of "Priority control parameter setting example" which is an example of the setting of the above operation. As for VC1 and VC3, as traffic shaping is required and priority is not specified, "5" and "3" in each field of "Service Category Level" are set as they are in each field of "Priority Level". As for VC2, as traffic shaping is not required, "2" in the field of "Service Category Level" is set in the field of "Priority Level" unconditionally. As for VC4, as traffic shaping is required and priority is specified, "1" in the field of "Specified Level" is set in the field of "Priority Level" independent of "3" in the field of "Service Category Level". "Priority Level" is controlled as a number equivalent to the number of the round robin control section 33 shown in Fig. 2 or the level of the fixed priority 34.

In the above embodiment, five levels are set as shown in Fig. 2 as a level of priority, however, "N" pieces of levels may be also set. "N" may be also larger or smaller than five in the above embodiment. For example, if five levels in this embodiment are reduced to four levels, RR4 and RR5 in the round robin control section 33 shown in Fig. 2 may be also integrated. For example, if five levels in this embodiment are increased to ten levels, it is considered that output from a shaper at each service category level is arranged one by one over and under a classification queue not requiring shaping. In this case, there is effect that the fine adjustment of priority between traffic requiring shaping control and traffic not requiring shaping control in the same service category is enabled.

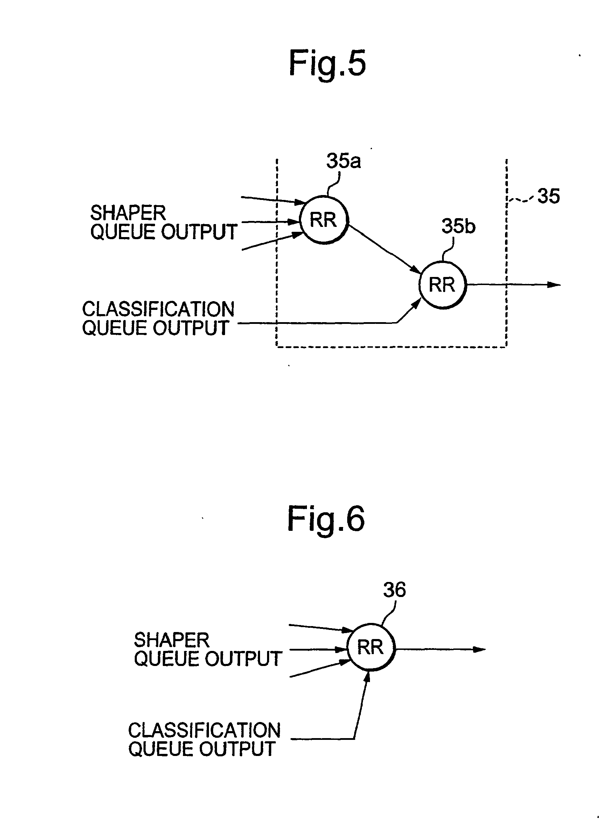

Fig. 5 shows another embodiment of the present invention and a round robin control section 35 is different from the round robin control section 33 in the example shown in Fig. 2. The round robin control section 35 shown in Fig. 5 is provided with the former round robin 35a for output from a shaper and the latter round robin 35b in which the above output and output from a classification queue are further integrated. Hereby, round robin output from a shaper and output from a classification queue can be fairly output in one to one and composition for eliminating the fluctuation of priority related to whether traffic shaping is required or not can be adopted.

Fig. 6 shows further another embodiment of the present invention and a round robin control section 36 is different from the round robin control section 33 in the embodiment shown in Fig. 2. In the round robin control section 36 shown in Fig. 6, shaper output and classification queue output are once integrated. Hereby, each shaper output and classification queue output can be all fairly output, not only the fluctuation of priority related to whether traffic shaping is required or not is eliminated but composition in which one shaper output and one classification queue output are at an equal level can be adopted.

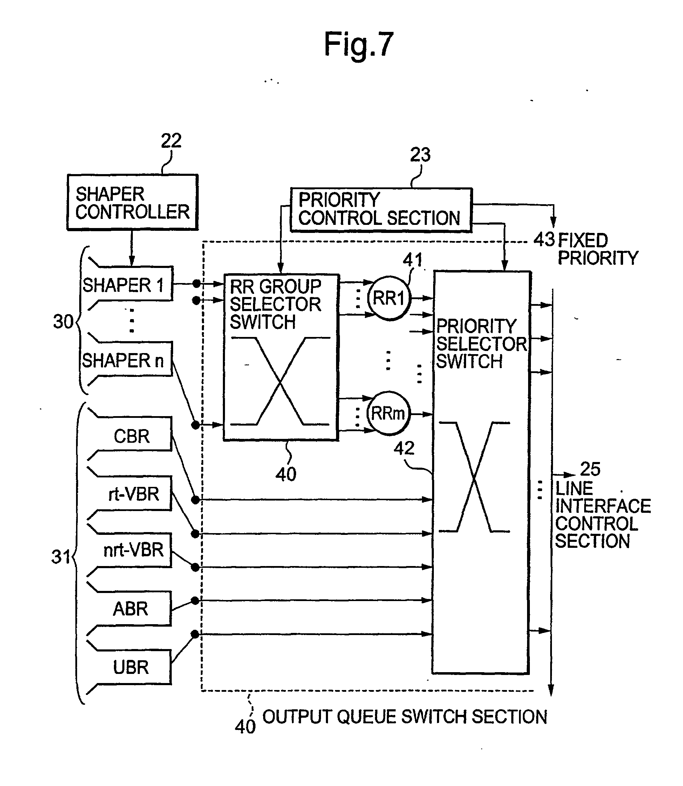

Fig. 7 shows further another embodiment of the present invention. This embodiment is different from the embodiment shown in Fig. 2 in that an output queue switch section 4 is provided and inside it, an RR group selector switch 40 and a priority selector switch 42 are provided. The functions which the RR group selector 32 shown in Fig. 2 has are replaced with functions which the RR group selector switch 40 has in Fig. 9 and hereby, one queue has only to be fixedly output from a shaper queue group 30 to the RR group selector switch. Further, in the priority selector switch 42, output from a round robin control section 41 and output from a classification queue group 31 can be rearranged in arbitrary priority by further switching. The round robin control section 41 is different from the round robin control section 33 shown in Fig. 2 in that as the round robin control section 41 is fixedly connected to the switches before and after the round robin control section, setting every VC is not required to be applied by the priority control section 33.

In this embodiment, programming from the priority control section 23 to the output queue switch section 4 can be also equalized to that in the embodiment shown in Fig. 2 and if necessary, functions may be also graded down to functions in compositions shown in Figs. 10 and 11 shown as the prior examples. Also, as described above, independent of whether traffic shaping is required or not and independent of the class of a service category, the dynamic variation of priority is enabled by programming the operation of the output queue switch section 4.

As described above, according to the present invention, output from a shaper can be controlled according to a service category and specified priority like the output of a classification queue not requiring traffic shaping. Hereby, suitable priority can be given to output from a shaper by the priority control section and the RR group selector and the quality of service of ATM traffic is kept high.

Also, mounted hardware can be greatly saved by dynamically determining the priority of output from a shaper every VC, compared with a system fixedly provided with a shaper every service class. Assuming that the number of shapers is "n" and "n" pieces of traffics requiring shaping control all belong to the same service category, total "5 x n" shapers were required, however, according to the present invention, as the dynamic allocation of the priority of shapers is enabled, effect having upon the saving of mounted shaper hardware is large.

Further, the priority of output from a shaper can be determined by specification except a service category. Hereby, priority depending upon difference in an application and service every VC can be directly reflected upon priority control in the output buffer.

## Claims

1. An ATM buffer controller for controlling traffic shaping and output priority for ATM cells, which have been switched by an ATM switch (10) at a preceding stage and are to be output to a line interface control section, said ATM buffer controller comprising:
- a buffer memory (20) for storing ATM cells switched by the ATM switch (10);
- an output buffer control section (2) for managing a first and a second plurality of queues in the buffer memory (20);
- a shaper controller (22) for executing parameter control and operation control for shaping traffic in the first plurality of queues;
- a priority control section (23) for executing output priority control for cells outputted from the first and second plurality of queues,
**characterized in that:**
- said priority control section (23) is provided with an output queue switch section comprising a round robin group selector switch (40), a plurality of round robin control sections and a priority selector switch (42);
- the round robin group selector switch (40) is adapted to switch cells output from the first plurality of queues to one of the plurality of inputs of one of the plurality of round robin control sections (41);
- each round robin control section is adapted to output cells switched by the round robin group selector switch, to an input of the priority selector switch; and that
- the priority selector switch (42) is adapted to switch cells outputted from the second plurality of queues and to switch cells outputted by one of the round robin control sections (41), to an output of the priority selector switch, each output of the priority selector switch being associated with a fixed priority for outputting a cell to the line interface control section.

2. An ATM buffer controller according to claim 1,
**characterized in that** said priority control section (23) comprises:
- a round robin group selector (32) for selecting according to which priority an ATM cell in a shaper is output to a line and
- a round robin control section (33) for fairly and sequentially outputting ATM cells input to the same round robin group out of output from a shaper, the priority of which is given by the round robin group selector (32); and
**in that** ATM cells are output to a line according to fixed priority (34) given by the round robin control section (33).

3. The ATM buffer controller according to one of the claims 1 or 2,
**characterized in that:**
- said output buffer (20) is controlled according to a shaping parameter set by a shaper controller (22);
- queues are classified into a shaper queue group (30) composed of virtual channels requiring shaping and a classification queue group composed of queues every ATM service category; and
- these queues are shared by plural virtual channels of the same class.

4. The ATM buffer controller according to claim 2,
**characterized in that** the round robin control section (41) is fixedly connected to the switches before and after the round robin control section.

5. The ATM buffer controller according to one of the claims 1 or 2, **characterized in that** said ATM buffer controller further comprising:
- a buffer control memory (24) for storing a parameter and data required for the output buffer functioning section (21), the shaper controller (22) and the priority control section (23) to be operated; and
- a line interface control section (25) for interfacing the output buffer functioning section (21) and the output circuit to output ATM cells to an ATM network.

6. An ATM buffer control method used in an apparatus, which transmits and receives ATM cells via an asynchronous transfer mode network, for maintaining a high level of the quality of service of ATM traffic, having the steps of:
- switching an ATM cell according to a program stored in a memory;
- storing the ATM cell by a buffer memory (20), which is switched before the ATM cell is sent to a line interface control section;
- managing a first and a second plurality of queues in an output buffer control section (2) in the buffer memory (20);
- executing parameter control and operation control for shaping traffic in the first plurality of queues by a shaper controller (22); and
- executing output priority control for cells outputted from the first and second plurality of queues by a priority control section (23),
**characterized by** further comprising the steps of:
- switching cells outputted from the first plurality of queues to one of a plurality of round robin control sections (41) by a round robin group selector switch (40); and
- switching cells outputted from the second plurality of queues and cells outputted from one of the round robin control sections (41) to an output of a priority selector switch, each output of the priority switch being fixed associated with a fixed priority for outputting a cell to the line interface control section, in the priority selector switch (42).

7. The ATM buffer control method according to claim 6,
**characterized by** further comprising the steps of:
- selecting by a round robin group selector (32), according to which priority an ATM cell in a shaper is output to a line; and
- fairly and sequentially outputting ATM cells by a round robin control section (33), input to the same round robin group out of output from a shaper, the priority of which is given by the round robin group selector (32); and
- outputting the ATM cells to a line according to fixed priority (34) given by the round robin control section (33).

8. The ATM buffer control method according to one of the claims 6 or 7, **characterized by** the step of controlling said output buffer (20) by a shaper controller (22) according to a shaping parameter set;
- classifying the queues into a shaper queue group composed of virtual channels requiring shaping and a classification queue group composed of queues every ATM service category; and
- sharing these queues by plural virtual channels of the same class.

9. The ATM buffer control method according to one of the claims 6 or 7, **characterized in that** said ATM buffer controller further comprising:
- a buffer control memory (24) for storing a parameter and data required for the output buffer functioning section (21), the shaper controller (22) and the priority control section (23) to be operated; and
- a line interface control section (25) for interfacing the output buffer functioning section (21) and the output circuit to output ATM cells to an ATM network.

10. The ATM buffer control method according to one of the claims 6 or 7, **characterized by** the step of sending out one output from grouped traffic having the same priority level of the shaper queue by a first round robin circuit.

11. The ATM buffer control method according to one of the claims 6 or 7, **characterized by** the step of sending out one output from the first round robin circuit and classified queue output by a second round robin circuit.

12. The ATM buffer control method according to one of the claims 6 or 7, **characterized by** the step of changing the priority of output from each queue for traffic, which is requiring shaping and not requiring shaping, by a queue switch.

## Patentansprüche

1. ATM-Puffer-Controller zur Steuerung der Verkehrsformung oder des Traffic-Shaping sowie der Ausgabepriorität für ATM-Zellen, die mit Hilfe eines ATM-Switch (10) in einem früheren Stadium vermittelt wurden und an einen Leitungsschnittstellen-Steuerabschnitt ausgegeben werden sollen, wobei der ATM-Puffer-Controller Folgendes aufweist:
- einen Pufferspeicher (20) zum Speichern von ATM-Zellen, die von dem ATM-Switch (10) vermittelt worden sind;
- einen Ausgabepuffer-Steuerabschnitt (2) zur Verwaltung einer ersten und einer zweiten Vielzahl an Warteschlangen in dem Pufferspeicher (20);
- einen Traffic-Shaping-Controller (22) zur Ausführung einer Parametersteuerung und einer Betriebssteuerung für das Traffic-Shaping in der ersten Vielzahl an Warteschlangen;
- einen Prioritäts-Steuerabschnitt (23) zur Ausführung einer Ausgabeprioritätssteuerung für Zellen, die von der ersten und der zweiten Vielzahl an Warteschlangen ausgegeben wurden;
**dadurch gekennzeichnet, dass**:
- für den Prioritäts-Steuerabschnitt (23) ein Ausgabewarteschlange-Vermittlungsabschnitt bereitgestellt ist, welcher einen zyklischen oder Round Robin-Gruppenwähler (40), eine Vielzahl an Round Robin-Steuerabschnitten und einen Prioritäts-Wähler (42) aufweist;
- der Round-Robin-Gruppenwähler (40) so ausgelegt ist, dass er Zellen, die von der ersten Vielzahl an Warteschlangen ausgegeben werden, an einen aus der Vielzahl von Eingängen eines aus der Vielzahl von Round Robin-Steuerabschnitten (41) vermittelt;
- jeder Round Robin-Steuerabschnitt so ausgelegt ist, dass er Zellen ausgibt, die von dem Round-Robin-Gruppenwähler an einen Eingang des Prioritäts-Wählers vermittelt werden; und dass
- der Prioritäts-Wähler (42) so ausgelegt ist, dass er Zellen, die von der zweiten Vielzahl an Warteschlangen ausgegeben werden, vermittelt, und dass er Zellen, die von einer der Round Robin-Steuerabschnitte (41) ausgegeben werden, an einen Ausgang des Prioritäts-wählers vermittelt, wobei jeder Ausgang des Prioritäts-Wählers mit einer festgelegten Priorität zur Ausgabe einer Zelle an den Leitungsschnittstellen-Steuerabschnitt verbunden ist.

2. ATM-Puffer-Controller nach Anspruch 1, **dadurch gekennzeichnet, dass** der Prioritäts-Steuerabschnitt (23) Folgendes aufweist:
- einen Round Robin-Gruppenwähler (32) zur Auswahl, gemäß welcher Priorität eine ATM-Zelle in einem Traffic-Shaper an eine Leitung ausgegeben wird; und
- einen Round Robin-Steuerabschnitt (33) für die angemessene und aufeinanderfolgende Ausgabe von ATM-Zellen, die in dieselbe Round Robin-Gruppe aus einer Ausgabe von dem Traffic-Shaper eingegeben wird, dessen Priorität durch den Round Robin-Gruppenwähler (32) vorgegeben ist; und
- dass ATM-Zellen an eine Leitung gemäß einer festgelegten Priorität (34), die durch den Round-Robin-Steuerabschnitt (33) vorgegeben ist, ausgegeben werden.

3. ATM-Puffer-Controller nach einem der Ansprüche 1 oder 2, **dadurch gekennzeichnet, dass**:
- der Ausgabepuffer (20) gemäß einem Traffic-Shaping-Parameter, der durch einen Traffic-Shaper-Controller (22) eingestellt oder festgelegt wird, gesteuert wird;
- Warteschlangen in eine Traffic-Shaping-Warteschlangengruppe (30) klassifiziert werden, die sich aus virtuellen Kanälen zusammensetzt, die ein Traffic-Shaping benötigen, und in eine Klassifikations-Warteschlangenguppe klassifiziert werden, die sich aus Warteschlangen einer jeden ATM-Dienstkategorie zusammensetzt; und
- diese Warteschlangen von einer Vielzahl an virtuellen Kanälen derselben Klasse gemeinsam verwendet werden.

4. ATM-Puffer-Controller nach Anspruch 2, **dadurch gekennzeichnet, dass** der Round Robin-Steuerabschnitt (41) mit den Switches vor und nach dem Round Robin-Steuerabschnitt fest verbunden ist.

5. ATM-Puffer-Controller nach einem der Ansprüche 1 oder 2, **dadurch gekennzeichnet, dass** der ATM-Puffer-Controller Folgendes aufweist:
einen Puffer-Haltespeicher (24) zum Speichern eines Parameters und von Daten, die für den Betrieb des Ausgabepuffer-Funktions- oder Wirkabschnitts (21), des Traffic-Shaper-Controllers (22) und des Prioritäts-Steuerabschnitts (23) erforderlich sind; und
einen Leitungsschnittstellen-Steuerabschnitt (25) zur Bildung einer Schnittstelle zwischen dem Ausgabepuffer-Funktions- oder Wirkabschnitt (21) und dem Ausgangsschaltkreis zur Ausgabe von ATM-Zellen an ein ATM-Netzwerk.

6. ATM-Puffer-Steuerverfahren, welches in einer Vorrichtung eingesetzt wird, die ATM-Zellen über ein asynchrones Übermittlungsnetz (ATM-Netz) sendet und empfängt, zur Aufrechterhaltung einer Dienstgüte eines ATM-Verkehrs auf hohem Niveau, wobei das Verfahren die folgenden Schritte aufweist:
- Vermitteln einer ATM-Zelle gemäß einem Programm, das in einem Speicher gespeichert ist;
- Speichern der ATM-Zelle mit Hilfe eines Pufferspeichers (20), wobei die ATM-Zelle vermittelt wird, bevor sie an einen Leitungsschnittstellen-Steuerabschnitt gesendet wird;
Verwalten einer ersten und einer zweiten Vielzahl an Warteschlangen in einem Ausgabepuffer-Steuerabschnitt (2) in dem Pufferspeicher (20);
Ausführen einer Parametersteuerung und Betriebssteuerung zum Traffic-Shaping in der ersten Vielzahl an Warteschlangen mit Hilfe eines Traffic-Shaper-Controllers (22); und
Ausführen einer Ausgangsprioritäts-Steuerung für Zellen, die von der ersten und zweiten Vielzahl an Warteschlangen mit Hilfe eines Prioritäts-Steuerabschnitts (23) ausgegeben werden;
**dadurch gekennzeichnet, dass** das Verfahren des Weiteren die folgenden Schritte aufweist:
- Vermitteln von Zellen, die von der ersten Vielzahl an Warteschlangen an einen aus einer Vielzahl von Round-Robin-Steuerabschnitten (41) mit Hilfe eines Round Robin-Gruppenwählers (40) ausgegeben werden; und
- Vermitteln von Zellen, die von der zweiten Vielzahl an Warteschlangen ausgegeben werden, sowie von Zellen, die von einem der Round Robin-Steuerabschnitte (41) an einen Ausgang eines Prioritätswählers ausgegeben werden, wobei jeder Ausgang des Prioritätswählers mit einer festgelegten Priorität zur Ausgabe einer Zelle an den Leitungsschnittstellen-Steuerabschnitt in dem.Prioritätswähler (42) fest verbunden ist.

7. ATM-Puffer-Steuerverfahren nach Anspruch 6, **dadurch gekennzeichnet, dass** das Verfahren des Weiteren die folgenden Schritte aufweist:
- Auswählen mit Hilfe eines Round Robin-Gruppenwählers (32), gemäß welcher Priorität eine ATM-Zelle in einem Traffic-Shaper an eine Leitung ausgegeben wird; und
- Angemessene und aufeinanderfolgende Ausgabe von ATM-Zellen durch einen Round-Robin-Steuerabschnitt (33), die in dieselbe Round Robin-Gruppe aus einer Ausgabe von einer Traffic-Shaper eingegeben werden, dessen Priorität durch den Round Robin-Gruppenwähler (32) vorgegeben ist; und
- Ausgabe der ATM-Zellen an eine Leitung gemäß einer festgelegten Priorität (34), die durch den Round Robin-Steuerabschnitt (33) vorgegeben ist.

8. ATM-Puffer-Steuerverfahren nach einem der Ansprüche 6 oder 7, **dadurch gekennzeichnet, dass** das Verfahren die folgenden Schritte aufweist:
- Steuern des Ausgabepuffers (20) mit Hilfe eines Traffic-Shaper-Controllers (22) gemäß einem festgelegten oder eingestellten Traffic-Shaping-Parameter;
- Klassifizieren der Warteschlangen in eine Traffic-Shaper-Warteschlangengruppe, welche sich aus virtuellen Kanälen zusammensetzt, die ein Shaping benötigen, und in eine Klassifikations-Warteschlangengruppe, die sich aus Warteschlangen einer beliebigen ATM-Dienstkategorie zusammensetzt; und
- gemeinsames Benutzen dieser Warteschlangen durch eine Vielzahl an virtuellen Kanälen derselben Klasse.

9. ATM-Puffer-Steuerverfahren nach einem der Ansprüche 6 oder 7, **dadurch gekennzeichnet, dass** der ATM-Puffer-Controller des Weiteren Folgendes aufweist:
- einen Puffer-Haltespeicher (24) zum Speichern eines Parameters und von Daten, die für den Betrieb des Ausgabepuffer-Funktions- oder Wirkabschnitts (21), des Traffic-Shaper-Controllers (22) und des Prioritäts-Steuerabschnitts (23) erforderlich sind; und
- einen Leitungsschnittstellen-Steuerabschnitt (25) zur Bildung einer Schnittstelle zwischen dem Ausgabepuffer-Funktions- oder Wirkabschnitt (21) und dem Ausgangsschaltkreis zur Ausgabe von ATM-Zellen an ein ATM-Netzwerk.

10. ATM-Puffer-Steuerverfahren nach einem der Ansprüche 6 oder 7, **gekennzeichnet durch** den Schritt des Aussendens einer Ausgabe von einem Gruppenverkehr, welcher dasselbe Prioritätsniveau der Traffic-Shaper-Warteschlange aufweist, **durch** einen ersten Round-Robin-Schaltkreis.

11. ATM-Puffer-Steuerverfahren nach einem der Ansprüche 6 oder 7, **gekennzeichnet durch** den Schritt des Aussendens einer Ausgabe von dem ersten Round-Robin-Schaltkreis und einer klassifizierten Warteschlangenausgabe **durch** einen zweiten Round-Robin-Schaltkreis.

12. ATM-Puffer-Steuerverfahren nach einem der Ansprüche 6 oder 7, **gekennzeichnet durch** den Schritt des Veränderns der Priorität einer Ausgabe von jeder Traffic-Warteschlange, welche ein Shaping benötigt oder kein Shaping benötigt, mit Hilfe eines Warteschlangen-Schalters.

## Revendications

1. Contrôleur de tampon ATM destiné à commander la mise en forme du trafic et la priorité de sortie pour des cellules ATM, qui ont été commutées par un commutateur ATM (10) au niveau d'un étage précédent et doivent être sorties vers une section de commande d'interface de ligne, ledit contrôleur de tampon ATM comprenant :
- une mémoire tampon (20) pour stocker des cellules ATM commutées par le commutateur ATM (10) ;
- une section de commande de tampon de sortie (2) pour gérer une première et une seconde pluralités de files d'attente dans la mémoire tampon (20) ;
- un contrôleur d'outil de mise en forme (22) pour exécuter une commande des paramètres et une commande des opérations pour mettre en forme le trafic dans la première pluralité de files d'attente ;
- une section de commande de priorité (23) pour exécuter une commande de priorité de sortie pour des cellules sorties de la première et de la seconde pluralités de files d'attente,
**caractérisé en ce que** :
- ladite section de commande de priorité (23) est pourvue d'une section de commutation de file d'attente de sortie comprenant un commutateur sélecteur de groupe round robin (tourniquet) (40), une pluralité de sections de commande round robin et un commutateur sélecteur de priorité (42) ;
- le commutateur sélecteur de groupe round robin (40) est adapté pour commuter les cellules sorties de la première pluralité de files d'attente vers une de la pluralité d'entrées d'une de la pluralité de sections de commande round robin (41) ;
- chaque section de commande round robin est adaptée pour sortir les cellules commutées par le commutateur sélecteur de groupe round robin, vers une entrée du commutateur sélecteur de priorité ; et **en ce que**
- le commutateur sélecteur de priorité (42) est adapté pour commuter les cellules sorties de la seconde pluralité de files d'attente et pour commuter les cellules sorties par une des sections de commande round robin (41), vers une sortie du commutateur sélecteur de priorité, chaque sortie du commutateur sélecteur de priorité étant associée à une priorité fixée pour sortir une cellule vers la section de commande d'interface de ligne.

2. Contrôleur de tampon ATM selon la revendication 1,
**caractérisé en ce que** ladite section de commande de priorité (23) comprend :
- un sélecteur de groupe round robin (32) pour sélectionner selon quelle priorité une cellule ATM dans un outil de mise en forme est sortie vers une ligne ; et
- une section de commande round robin (33) pour sortir équitablement et séquentiellement les cellules ATM entrées dans le même groupe round robin de la sortie d'un outil de mise en forme, dont la priorité est donnée par le sélecteur de groupe round robin (32) ; et
**en ce que** les cellules ATM sont sorties vers une ligne selon une priorité fixée (34) donnée par la section de commande round robin (33).

3. Contrôleur de tampon ATM selon l'une des revendications 1 ou 2,
**caractérisé en ce que** :
- ledit tampon de sortie (20) est commandé selon un paramètre de mise en forme établi par un contrôleur d'outil de mise en forme (22) ;
- des files d'attente sont classées dans un groupe de files d'attente d'outil de mise en forme (30) composé de canaux virtuels requérant la mise en forme et un groupe de files d'attente de classification composé de files d'attente pour chaque catégorie de service ATM ; et
- ces files d'attente sont partagées par plusieurs canaux virtuels de la même classe.

4. Contrôleur de tampon ATM selon la revendication 2,
**caractérisé en ce que** la section de commande round robin (41) est connectée de manière fixe aux commutateurs avant et après la section de commande round robin.

5. Contrôleur de tampon ATM selon l'une des revendications 1 ou 2, **caractérisé en ce que** ledit contrôleur de tampon ATM comprend en outre :
- une mémoire de commande de tampon (24) pour stocker un paramètre et des données requis par la section de fonctionnement de tampon de sortie (21), le contrôleur d'outil de mise en forme (22) et la section de commande de priorité (23) devant être exploitées ; et
- une section de commande d'interface de ligne (25) pour interfacer la section de fonctionnement de tampon de sortie (21) et le circuit de sortie pour sortir les cellules ATM vers un réseau ATM.

6. Procédé de commande de tampon ATM utilisé dans un appareil, qui transmet et reçoit des cellules ATM via un réseau à mode de transfert asynchrone, pour maintenir un niveau élevé de qualité de service du trafic ATM, comportant les étapes consistant à :
- commuter une cellule ATM selon un programme stocké dans une mémoire ;
- stocker la cellule ATM par une mémoire tampon (20), qui est commutée avant que la cellule ATM ne soit envoyée à une section de commande d'interface de ligne ;
- gérer une première et une seconde pluralités de files d'attente dans une section de commande de tampon de sortie (2) dans la mémoire tampon (20) ;
- exécuter une commande des paramètres et une commande de fonctionnement pour mettre en forme le trafic dans la première pluralité de files d'attente par un contrôleur d'outil de mise en forme (22) ; et
- exécuter une commande de priorité de sortie pour les cellules sorties de la première et de la seconde pluralités de files d'attente par une section de commande de priorité (23),
**caractérisé en ce qu'**il comprend en outre les étapes consistant à :
- commuter les cellules sorties de la première pluralité de files d'attente vers une d'une pluralité de sections de commande round robin (41) par un commutateur sélecteur de groupe round robin (40) ; et
- commuter les cellules sorties de la seconde pluralité de files d'attente et les cellules sorties d'une des sections de commande round robin (41) vers une sortie d'un commutateur sélecteur de priorité, chaque sortie du commutateur de `priorité étant fixe associée à une priorité fixée pour sortir une cellule vers la section de commande d'interface de ligne, dans le commutateur sélecteur de priorité (42).

7. Procédé de commande de tampon ATM selon la revendication 6,
**caractérisé en ce qu'**il comprend en outre les étapes consistant à :
- sélectionner par un sélecteur de groupe round robin (32) selon quelle priorité une cellule ATM dans un outil de mise en forme est sortie vers une ligne ; et
- sortir équitablement et séquentiellement les cellules ATM par une section de commande round robin (33), entrées dans le même groupe round robin de la sortie d'un outil de mise en forme, dont la priorité est donnée par le sélecteur de groupe round robin (32) ; et
- sortir les cellules ATM vers une ligne selon une priorité fixée (34) donnée par la section de commande round robin (33).

8. Procédé de commande de tampon ATM selon l'une des revendications 6 ou 7, **caractérisé par** l'étape consistant à commander ledit tampon de sortie (20) par un contrôleur d'outil de mise en forme (22) selon un paramètre de mise en forme établi ;
- classer les files d'attente dans un groupe de files d'attente d'outil de mise en forme composé de canaux virtuels requérant la mise en forme et un groupe de files d'attente de classification composé de files d'attente pour chaque catégorie de service ATM ; et
- partager ces files d'attente par plusieurs canaux virtuels de la même classe.

9. Procédé de commande de tampon ATM selon l'une des revendications 6 ou 7, **caractérisé en ce que** ledit contrôleur de tampon ATM comprend en outre :
- une mémoire de commande de tampon (24) pour stocker un paramètre et des données requis pour la section de fonctionnement de tampon de sortie (21), le contrôleur d'outil de mise en forme (22) et la section de commande de priorité (23) devant être exploitées ; et
- une section de commande d'interface de ligne (25) pour interfacer la section de fonctionnement de tampon de sortie (21) et le circuit de sortie pour sortir les cellules ATM vers un réseau ATM.

10. Procédé de commande de tampon ATM selon l'une des revendications 6 ou 7, **caractérisé par** l'étape consistant à émettre une sortie depuis un trafic groupé ayant le même niveau de priorité de la file d'attente d'outil de mise en forme par un premier circuit round robin.

11. Procédé de commande de tampon ATM selon l'une des revendications 6 ou 7, **caractérisé par** l'étape consistant à émettre une sortie depuis le premier circuit round robin et une sortie de file d'attente classée par un second circuit round robin.

12. Procédé de commande de tampon ATM selon l'une des revendications 6 ou 7, **caractérisé par** l'étape consistant à changer la priorité de sortie de chaque file d'attente pour le trafic, qui requiert une mise en forme et ne requiert pas de mise en forme, par un commutateur de file d'attente.
